# EUROPEAN PATENT APPLICATION

(11) **EP 4 516 614 A1**
(43) Date of publication of application: **05.03.2025**
(21) Application number: 24196918.7
(22) Date of filing: 28.08.2024
(51) Int. Cl.: B60W 60/00

(54) **VEHICLE FOR PERFORMING MINIMAL RISK MANEUVER AND METHOD OF OPERATING THE VEHICLE**

(30) Priority: 28.08.2023 KR 20230112531; 06.08.2024 KR 20240104458
(71) Applicant: Hyundai Motor Company, Seoul 06797 (KR); Kia Corporation, Seocho-gu Seoul 06797 (KR)
(72) Inventor: Park, Jong Sung, 18280 Gyeonggi-do (KR); Min, Young bin, 18280 Gyeonggi-do (KR)
(74) Representative: Hoffmann Eitle

(57) **Abstract**

Various embodiments of the present document relate to a vehicle for performing a minimal risk maneuver and a method of operating the vehicle. An autonomous vehicle may detect whether or not a minimal risk maneuver is needed based on at least one among the surrounding environment information and the vehicle state information during autonomous driving of the vehicle, determine a minimal risk maneuver type and a target point where the vehicle will stop when the minimal risk maneuver is needed, and control the vehicle to stop at the target point based on the determined minimal risk maneuver type and target point.

## Description

### CROSS REFERENCE TO RELATED APPLICATION

The present application claims priority to Korean Patent Applications No. 10-2023-0112531, filed August 28, 2023, and 10-2024-0104458, filed August 06, 2024, the entire contents of which is incorporated herein for all purposes by this reference.

### BACKGROUND

### Field

This document relates to a vehicle for performing a minimal risk maneuver and a method of operating the vehicle.

### Description of the Related Art

Recently, advanced driver assistance systems (ADAS) are developed to help driving of drivers. The ADAS has a plurality of sub-technology categories and provides convenience to drivers. This ADAS is also called autonomous driving or Automated Driving System (ADS).

Meanwhile, errors may occur in the autonomous driving system while a vehicle is performing autonomous driving. When an appropriate response is not taken to such abnormalities in the autonomous driving system, the vehicle may be placed in a dangerous state.

### SUMMARY

Accordingly, various embodiments of this document disclose a vehicle that performs a minimal risk maneuver (MRM) to eliminate (or reduce) risk when a situation in which normal autonomous driving is not possible is detected during autonomous driving, and a method of operating the vehicle.

Various embodiments of this document disclose a method and device for determining a minimal risk maneuver stopping type and a stopping location when a situation in which normal autonomous driving is not possible is detected in a vehicle during autonomous driving.

Various embodiments of this document disclose a method and device for determining a minimal risk maneuver stopping type and a stopping location based on route complexity and stopping risk when a situation in which normal autonomous driving is not possible is detected in a vehicle during autonomous driving.

Technical problems to be solved in this document are not limited to the technical problems mentioned above, and other unmentioned technical problems can be clearly understood by those skilled in the art from the description below.

According to various embodiments of this document, an autonomous vehicle comprises at least one sensor for detecting a surrounding environment of the vehicle and generating surrounding environment information, a processor for generating vehicle state information by monitoring a state of the vehicle, and controlling autonomous driving of the vehicle and a controller for controlling an operation of the vehicle according to control of the processor.

According to an embodiment, the processor may determine whether a minimal risk maneuver is needed based on at least one among the surrounding environment information and the vehicle state information during autonomous driving of the vehicle, determine a minimal risk maneuver type and a target point where the vehicle will stop when the minimal risk maneuver is needed, and control the vehicle to stop at the target point based on the determined minimal risk maneuver type and target point.

According to an embodiment, the processor may calculate a maximum distance or a maximum time that can be driven in a minimum risk maneuver state, search for stoppable areas that can be reached within the maximum distance or the maximum time, classify the searched stoppable areas into full-shoulder stoppable areas and half-shoulder stoppable areas, calculate at least one among route complexity and stopping risk of each of the full-shoulder stoppable areas, determine whether or not stopping is possible at the full-shoulder stoppable areas based on at least one among the calculated route complexity and stopping risk, and calculate, when stopping is not possible in all of the full-shoulder stoppable areas, at least one among route complexity and stopping risk of each of the half-shoulder stoppable areas, and determine a minimal risk maneuver type and a target point where the vehicle will stop based on at least one among the route complexity and the stopping risk at the half-shoulder stoppable areas.

According to an embodiment, the processor may calculate a maximum distance or a maximum time that can be driven in a minimum risk maneuver state, search for stoppable areas that can be reached within the maximum distance or the maximum time, calculate at least one among route complexity and stopping risk at the stoppable area, and determine a minimal risk maneuver type and a target point where the vehicle will stop based on the route complexity and the stopping risk of each of the stoppable areas.

According to an embodiment, the processor may search for full-shoulder stoppable areas that can be reached within the maximum distance or the maximum time, calculate route complexity of each of the searched full-shoulder stoppable areas, determine a full-shoulder stoppable area where route complexity is lower than or equal to a preset value and having the lowest value as a target point where the vehicle will stop, and determine a full-shoulder stop as the minimal risk maneuver.

According to an embodiment, the processor may search for half-shoulder stoppable areas, when there is no full-shoulder stoppable area where the route complexity is lower than or equal to a preset value, determine a half-shoulder stoppable area where the stopping risk is the lowest as a target point where the vehicle will stop and a half-shoulder stop as the minimal risk maneuver type, when there are half-shoulder stoppable areas where route complexity is lower than the route complexity of the full-shoulder stoppable areas and the stopping risk is lower than a preset risk, and determine an in-lane stop or a straight stop as the minimal risk maneuver type, when there is no half-shoulder stoppable area where the route complexity is lower than the route complexity of the full-shoulder stoppable areas.

According to an embodiment, the processor may search for half-shoulder stoppable areas, when there is no full-shoulder stoppable area where the route complexity is lower than or equal to a preset value, determine a half-shoulder stoppable area where the stopping risk is the lowest as a target point where the vehicle will stop and a half-shoulder stop as the minimal risk maneuver type, when there are half-shoulder stoppable areas where route complexity is lower than or equal to the preset value and the stopping risk is lower than a preset risk, and determine an in-lane stop or a straight stop as the minimal risk maneuver type, when there is no half-shoulder stoppable area where the route complexity is lower than or equal to the preset value.

According to an embodiment, the processor may search for full-shoulder stoppable areas and half-shoulder stoppable areas that can be reached within the maximum distance or the maximum time, calculate route complexity and stopping risk of each of the searched full-shoulder stoppable areas and half-shoulder stoppable areas, and select an in-lane stop or a straight stop as the minimal risk maneuver type when there is no stoppable area where the stopping risk is lower than a preset risk and the route complexity is lower than or equal to a preset value.

According to an embodiment, the processor may select a stoppable area where the route complexity is the lowest among stoppable areas where the stopping risk is lower than a preset risk, when there are stoppable areas where the stopping risk is lower than a preset risk and the route complexity is lower than or equal to a preset value, determine a full-shoulder stop as the minimal risk maneuver type, and determine the selected stoppable area as a target point, when the selected stoppable area is a full-shoulder stoppable area, and determine a half-shoulder stop as the minimal risk maneuver type, and determine the selected stoppable area as a target point, when the selected stoppable area is not a full-shoulder stoppable area.

According to an embodiment, the processor may calculate the route complexity based on the number of intersections to pass, the number of left turns, the number of right turns, and a distance to a destination.

According to an embodiment, the processor may calculate the stopping risk based on a size of a stoppable area, whether an area is a stopping prohibited area, maximum speed information of a road, and traffic flow information.

According to various embodiments of this document, an operation method of a vehicle may comprise: acquiring at least one among surrounding environment information and vehicle state information during autonomous driving of the vehicle; determining whether a minimal risk maneuver is needed based on at least one among the surrounding environment information and the vehicle statue information; determining a minimal risk maneuver type and a target point where the vehicle will stop, when it is determined that a minimal risk maneuver is needed; and controlling the vehicle to stop at the target point based on the determined minimal risk maneuver type and target point.

According to an embodiment, the determining a minimal risk maneuver type and a target point may comprise calculating a maximum distance or a maximum time that can be driven in a minimum risk maneuver state; searching for stoppable areas that can be reached within the maximum distance or the maximum time; classifying the searched stoppable areas into full-shoulder stoppable areas and half-shoulder stoppable areas; calculating at least one among route complexity and stopping risk at the full-shoulder stoppable areas; determining whether or not stopping is possible at the full-shoulder stoppable areas based on at least one among the calculated route complexity and stopping risk; and calculating, when stopping is not possible in all of the full-shoulder stoppable areas, at least one among route complexity and stopping risk at the half-shoulder stoppable areas, and determining a minimal risk maneuver type and a target point where the vehicle will stop based on at least one among the route complexity and the stopping risk at the half-shoulder stoppable areas.

According to an embodiment, the determining a minimal risk maneuver type and a target point may further comprise calculating a maximum distance or a maximum time that can be driven in a minimum risk maneuver state; searching for stoppable areas that can be reached within the maximum distance or the maximum time, calculating at least one among route complexity and stopping risk of each of the stoppable area; and determining a minimal risk maneuver type and a target point where the vehicle will stop based on the route complexity and the stopping risk of the stoppable areas.

According to an embodiment, the determining a minimal risk maneuver type and a target point may further comprise searching for full-shoulder stoppable areas that can be reached within the maximum distance or the maximum time; calculating route complexity of the searched full-shoulder stoppable areas; determining a full-shoulder stoppable area where route complexity is lower than or equal to a preset value and having the lowest value as a target point where the vehicle will stop; and determining a full-shoulder stop as the minimal risk maneuver.

According to an embodiment, the determining a minimal risk maneuver type and a target point may further comprise searching for half-shoulder stoppable areas, when there is no full-shoulder stoppable area where the route complexity is lower than or equal to a preset value; determining a half-shoulder stoppable area where the stopping risk is the lowest as a target point where the vehicle will stop and a half-shoulder stop as the minimal risk maneuver type, when there are half-shoulder stoppable areas where route complexity is lower than the route complexity of the full-shoulder stoppable areas and the stopping risk is lower than a preset risk; and determining an in-lane stop or a straight stop as the minimal risk maneuver type, when there is no half-shoulder stoppable area where the route complexity is lower than the route complexity of the full-shoulder stoppable areas.

According to an embodiment, the determining a minimal risk maneuver type and a target point may further comprise searching for half-shoulder stoppable areas, when there is no full-shoulder stoppable area where the route complexity is lower than or equal to a preset value; determining a half-shoulder stoppable area where the stopping risk is the lowest as a target point where the vehicle will stop and a half-shoulder stop as the minimal risk maneuver type, when there are half-shoulder stoppable areas where route complexity is lower than or equal to the preset value and the stopping risk is lower than a preset risk; and determining an in-lane stop or a straight stop as the minimal risk maneuver type, when there is no half-shoulder stoppable area where the route complexity is lower than or equal to the preset value.

According to an embodiment, the determining a minimal risk maneuver type and a target point may comprise searching for full-shoulder stoppable areas and half-shoulder stoppable areas that can be reached within the maximum distance or the maximum time; calculating route complexity and stopping risk at the searched full-shoulder stoppable areas and half-shoulder stoppable areas; and selecting an in-lane stop or a straight stop as the minimal risk maneuver type when there is no stoppable area where the stopping risk is lower than a preset risk and the route complexity is lower than or equal to a preset value.

According to an embodiment, the determining a minimal risk maneuver type and a target point may further comprise selecting a stoppable area where the route complexity is the lowest among stoppable areas where the stopping risk is lower than a preset risk, when there are stoppable areas where the stopping risk is lower than a preset risk and the route complexity is lower than or equal to a preset value; determining a full-shoulder stop as the minimal risk maneuver type, and determines the selected stoppable area as a target point, when the selected stoppable area is a full-shoulder stoppable area; and determining a half-shoulder stop as the minimal risk maneuver type, and determines the selected stoppable area as a target point, when the selected stoppable area is not a full-shoulder stoppable area.

According to an embodiment, the route complexity may be calculated based on the number of intersections to pass, the number of left turns, the number of right turns, and a distance to a destination.

According to an embodiment, the stopping risk may be calculates based on a size of a stoppable area, whether an area is a stopping prohibited area, maximum speed information of a road, and traffic flow information.

### BRIEF DESCRIPTION OF THE DRAWINGS

FIG. 1 is a block diagram showing a vehicle according to various embodiments of this document.
FIG. 2 is a functional block diagram showing a processor according to various embodiments of this document.
FIG. 3 is a view showing minimal risk maneuver (MRM) strategies for each vehicle state according to various embodiments of this document.
FIG. 4 is a flowchart illustrating an operation of performing a minimal risk maneuver of a vehicle according to various embodiments.
FIG. 5 is a flowchart illustrating an operation of determining a target point and an MRM type in consideration of route complexity and stopping risk when performing a minimal risk maneuver of a vehicle according to various embodiments.
FIG. 6 is a diagram showing examples of calculating a maximum time that can be driven in a fault state according to various embodiments.
FIG. 7 is a view showing an example for explaining the operation of FIG. 5.
FIG. 8 is a flowchart illustrating an operation of determining a target point and an MRM type in consideration of route complexity and stopping risk when performing a minimal risk maneuver of a vehicle according to other embodiments.

### DETAILED DESCRIPTION

Hereinafter, embodiments of this document will be described in detail with reference to the accompanying drawings.

The configuration of this document and operation effects according thereto will be clearly understood through the detailed description below. Prior to detailed description of this document, like components are indicated by like symbols as much as possible although the components are shown in different drawings, and it should be noted that when it is determined that known configurations may obscure the gist of the present disclosure, detailed description thereof will be omitted.

Prior to detailed description of this document, terms used in this document may be defined as follows.

A vehicle is provided with an Automated Driving System (ADS) and is capable of autonomous driving. For example, the vehicle may perform at least one among steering, acceleration, deceleration, lane change, and stopping (or halt) by the ADS without handling of the driver. The ADS may include, for example, at least one among Pedestrian Detection and Collision Mitigation System (PDCMS), Lane Change Decision Aid System (LCDAS), Lane Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human who uses the vehicle and is provided with services of the autonomous driving system.

Vehicle control authority is the authority of controlling at least one component of the vehicle and/or at least one function of the vehicle. At least one function of the vehicle may include, for example, at least one among a steering function, an acceleration function, a deceleration function (or braking function), a lane change function, a lane detection function, a lateral control function, an obstacle recognition and distance detection function, a powertrain control function, a safe area detection function, an engine on/off function, power on/off, and vehicle locking/unlocking. The listed vehicle functions are only examples for helping understanding, and the embodiments of this document are not limited thereto.

A shoulder may mean a space between the outermost road boundary (or outermost lane boundary) and the road edge (e.g., curb, guardrail) in the direction in which the vehicle is driving.

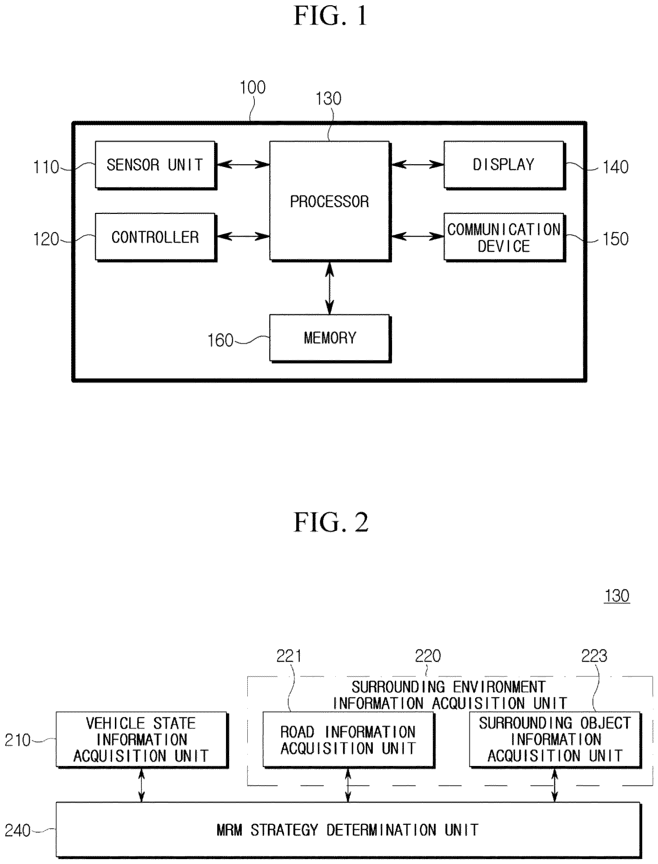

FIG. 1 is a block diagram showing a vehicle according to various embodiments of this document.

The configuration of the vehicle shown in FIG. 1 is an example, and each component may be configured of one chip, one part, or one electronic circuit, or may be configured of a combination of chips, parts, and/or electronic circuits. According to an embodiment, some of the components shown in FIG. 1 may be separated into a plurality of components and configured as different chips, different parts, or different electronic circuits, and some components may be combined to be configured as one chip, one part, or one electronic circuit. According to an embodiment, some of the components shown in FIG. 1 may be omitted, or other components not shown may be added.

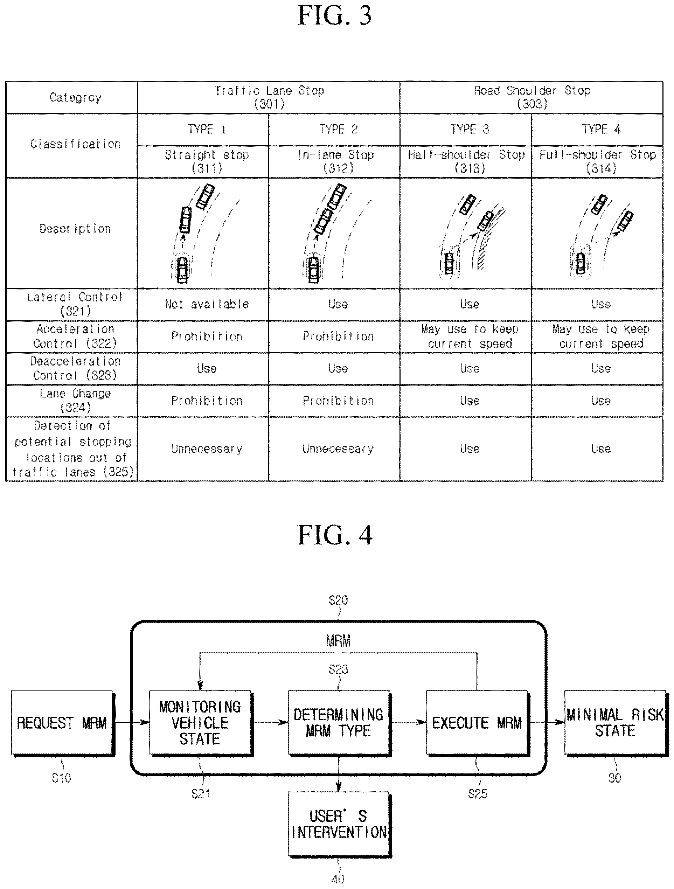

FIG. 2 is a functional block diagram showing a processor according to various embodiments of this document, and FIG. 3 is a view showing minimal risk maneuver (MRM) strategies for each vehicle state according to various embodiments of this document.

Referring to FIG. 1, a vehicle 100 may include a sensor unit 110, a controller 120, a processor 130, a display 140, a communication device 150, and a memory 160.

According to various embodiments, the sensor unit 110 may sense the environment around the vehicle 100 using at least one sensor, and generate data related to the surrounding environment based on the sensing result. According to an embodiment, the sensor unit 110 may acquire road information, information on the objects around the vehicle (e.g., other vehicles, people, objects, curbs, guardrails, lanes, obstacles), and/or location information of the vehicle based on the sensing data acquired from at least one sensor. The road information may include, for example, at least one among the locations of lanes, shapes of lanes, colors of lanes, types of lanes, number of lanes, presence of a shoulder, and the size of the shoulder. Objects around the vehicle may include, for example, at least one among the locations of the objects, sizes of the objects, shapes of the objects, distances to the objects, and relative speed with respect to the objects.

According to an embodiment, the sensor unit 110 may include at least one among a camera, light detection and ranging (LIDAR), radio detection and ranging (RADAR), an ultrasonic sensor, an infrared sensor, and a position measurement sensor. The listed sensors are only examples for helping understanding, and the sensors included in the sensor unit 110 of this document are not limited thereto. The camera may capture images around the vehicle and generate image data including lanes and/or surrounding objects on the front, rear, and/or lateral sides of the vehicle 100. The LiDAR may generate information on the objects located in the front, rear, and/or lateral sides of the vehicle 100 using light (or laser). The radar may generate information on the objects located in the front, rear, and/or lateral sides of the vehicle 100 using electromagnetic waves (or radio waves). The ultrasonic sensor may generate information on the objects located in the front, rear, and/or lateral sides of the vehicle 100 using ultrasonic waves. The infrared sensor may generate information on the objects located in the front, rear, and/or lateral sides of the vehicle 100 using infrared rays. The position measurement sensor may measure the current position of the vehicle 100. The position measurement sensor may include at least one among a Global Positioning System (GPS) sensor, a Differential Global Positioning System (DGPS) sensor, and a Global Navigation Satellite System (GNSS) sensor. The position measurement sensor may generate position data of the vehicle based on the signal generated by at least one among a GPS sensor, a DGPS sensor, and a GNSS sensor.

According to various embodiments, the controller 120 may control the operation of at least one component of the vehicle 100 and/or at least one function of the vehicle under the control of the processor 130. At least one function may include, for example, a steering function, an acceleration function (or a longitudinal acceleration function), a deceleration function (or a longitudinal deceleration function, a braking function), a lane change function, a lane detection function, an obstacle recognition and distance detection function, a lateral control function, a powertrain control function, a safe area detection function, engine on/off, power on/off, and vehicle locking/unlocking.

According to an embodiment, the controller 120 may control the operation of at least one component of the vehicle and/or at least one function of the vehicle for autonomous driving and/or minimal risk maneuver (MRM) of the vehicle 100 under the control of the processor 130. For example, the controller 120 may control at least one operation among a steering function, an acceleration function, a deceleration function, a lane change function, a lane detection function, a lateral control function, an obstacle recognition and distance detection function, a powertrain control function, and a safe area detection function for the minimal risk maneuver.

According to various embodiments, the processor 130 may control the overall operation of the vehicle 100. According to an embodiment, the processor 130 may include an electrical control unit (ECU) that can control the components inside the vehicle 100 in an integrated manner. For example, the processor 130 may include a central processing unit (CPU) or a micro controller unit (MCU) capable of performing operation processing.

According to various embodiments, when a designated event occurs, the processor 130 may activate the Automated Driving System (ADS) to control the components inside the vehicle 100 so that the vehicle may perform autonomous driving. The designated event may occur when autonomous driving of the vehicle is requested, when the vehicle control authority is delegated from the driver, or when conditions designated by the driver and/or designer are satisfied.

According to various embodiments, the processor 130 may determine whether normal autonomous driving is possible based on at least one among the vehicle state information and the surrounding environment information during the autonomous driving. When normal autonomous driving is not possible, the processor 130 may determine an MRM strategy and control the vehicle to stop according to the determined MRM strategy. Here, the MRM strategy may be a strategy of stopping the vehicle at a stopping location determined according to the determined MRM type.

According to an embodiment, the processor 130 may include a vehicle state information acquisition unit 210, a surrounding environment information acquisition unit 220, and an MRM strategy determination unit 240, as shown in FIG. 2.

The vehicle state information acquisition unit 210 may acquire vehicle state information indicating whether a mechanical and/or electrical defect occurs in the components inside the vehicle by monitoring the mechanical and/or electrical states of the components (e.g., sensors, actuators, etc.) inside the vehicle from the time point when the ADS is activated. The vehicle state information may include information on the mechanical and/or electrical states of the components inside the vehicle. For example, the vehicle state information may include information indicating whether the functions required for autonomous driving may operate normally according to the mechanical and/or electrical states of the components inside the vehicle.

The surrounding environment information acquisition unit 220 may acquire environment information around the vehicle using the sensor unit 110 and/or the communication device 150 from the time point when the ADS is activated. The surrounding environment information acquisition unit 220 may include a road information acquisition unit 221 for acquiring information on the road on which the vehicle is driving and surrounding roads, and a surrounding object information acquisition unit 223 for detecting objects around the vehicle from the sensor unit 110.

According to an embodiment, the road information acquisition unit 221 may acquire road information around the location where the vehicle is driving through the sensor unit 110. According to an embodiment, the road information acquisition unit 221 may acquire road information around the location where the vehicle is driving based on map information acquired from an external device (e.g., another vehicle, or a server) through the communication device 150 or built-in map information and the location information of the vehicle.

According to an embodiment, the surrounding object information acquisition unit 223 may acquire information on the objects around the vehicle (e.g., other vehicles, people, objects, curbs, guardrails, lanes, obstacles) through the sensor unit 110. For example, the surrounding object information acquisition unit 223 may acquire the distance and relative speed of at least one vehicle located in the front, lateral, and/or rear side of the vehicle.

According to an embodiment, the processor 130 may determine whether the functions required for autonomous driving may operate normally based on the vehicle state information. The functions required for autonomous driving may include at least one among, for example, a lane detection function, a lane change function, a lateral control function, a deceleration (or brake control) function, an acceleration control function, a powertrain control function, a safe area detection function, and an obstacle recognition and distance detection function. When at least one function required for autonomous driving is unable to operate normally, the processor 130 may determine that normal autonomous driving is not possible.

According to an embodiment, the processor 130 may determine whether the vehicle state is suitable for general driving conditions based on the vehicle state information. For example, the processor 130 may determine whether the mechanical state information (e.g., tire pressure information, or engine overheating information) of the vehicle is suitable for general driving conditions. When the vehicle state is unsuitable for general driving conditions, the processor 130 may determine that normal autonomous driving is not possible. For example, when driving of the vehicle is not possible due to tire pressure or engine overheating, the processor 130 may determine that normal autonomous driving is not possible.

According to an embodiment, the processor 130 may determine whether the environment around the vehicle is suitable for the operation design domain (ODD) of autonomous driving based on at least one piece of surrounding environment information. The operation design domain may represent conditions for the surrounding environment in which autonomous driving operates normally. When the surrounding environment information of the vehicle does not match the operation design domain, the processor 130 may determine that normal autonomous driving is not possible.

According to various embodiments, when normal autonomous driving is not possible, the processor 130 may determine that this is a situation in which a minimal risk maneuver for minimizing the risk of accident needs to be performed. When this is a situation in which a minimal risk maneuver needs to be performed, the processor 130 may select a minimal risk maneuver strategy among a plurality of minimal risk maneuver strategies using the MRM strategy determination unit 240. The minimal risk maneuver strategies may include four types as shown in FIG. 3. For example, the minimal risk maneuver strategies include a Traffic Lane Stop 301 strategy including type 1 and type 2, and a Road Shoulders Stop 303 strategy including type 3 and type 4.

The traffic lane stop 301 strategy may include a straight stop 311 of type 1 and an in-lane stop 312 of type 2. The road shoulders stop 303 strategy may include a half-shoulder stop 313 of type 3 and a full-shoulder stop 314 of type 4.

The straight stop 311 of type 1 is a type of stopping using only deceleration control 323, which is a longitudinal deceleration function, and does not involve lateral control. For example, the straight stop 311 may be performed in a situation where lane detection is not possible or lateral control is not possible due to the defect of the actuator. In the case of the straight stop 311 of type 1, acceleration control 322 and lane change 324 are prohibited or not possible, and a function of detecting a potential stopping location out of traffic lane 325 may not be needed. Here, detecting a potential stopping location out of traffic lane may mean a function of detecting locations of safe areas located outside the traffic lanes, such as a shoulder or drowsy rest area.

The in-lane stop 312 of type 2 is a type of stopping within the boundary of a lane in which the vehicle is driving. For example, the in-lane stop 312 may refer to a type in which a vehicle stops within the boundary of a lane in which the vehicle is driving through lateral control 321 and/or deceleration control 323. The driving lane may mean a lane in which the vehicle is driving at the time point when it is determined that the minimal risk maneuver needs to be performed. In the case of the in-lane stop 312, acceleration control 322 and lane change 324 are prohibited, and the function of detecting a potential stopping location out of traffic lane 325 may not be needed.

The half-shoulder stop 313 of type 3 is a type of stopping while a part of the vehicle is located on the shoulder of the road, and the full-shoulder stop 314 of type 4 is a type of stopping while the entire vehicle is stopped on the shoulder of the road. The functions of lateral control 321, deceleration control 323, lane change 324, and detecting a potential stopping location out of traffic lane 325 may be used in the half-shoulder stop 313 and the full-shoulder stop 314, and the acceleration control 322 may only be used to maintain the current speed.

According to an embodiment, priorities of the MRM types described above may be determined based on the roads, surrounding environments, and vehicle's fail-operational capability. For example, in order to minimize the risk at the time of stopping, priorities of MRM types corresponding to the road shoulders stop 303 strategy may be set higher than those of MRM types corresponding to the traffic lane stop 301 strategy. In addition, the priority of the full-shoulder stop 314 may be set higher than that of the half-shoulder stop 313, and the priority of the in-lane stop 312 may be set higher than that of the straight stop 311. That is, the priorities of MRM types may be set to decrease in order of the full-shoulder stop 314, half-shoulder stop 313, in-lane stop 312, and straight stop 311.

According to various embodiments, the MRM strategy determination unit 240 of the processor 130 may select an MRM strategy based on at least one among vehicle state information and surrounding environment information.

According to an embodiment, the MRM strategy determination unit 240 may confirm an MRM type that can be performed among the MRM types mentioned above based on the functions that operate normally and/or functions that cannot operate normally among the functions required for autonomous driving based on the vehicle state information. For example, when the lateral control 321 function operates normally, it can be determined that all of the straight stop 311, in-lane stop 312, half-shoulder stop 313, and full-shoulder stop 314 may be performed. As another example, when the lateral control 321 function does not operate normally, the MRM type that can be performed may be determined to include only the straight stop 311.

When there is only one MRM type that can be performed, which is confirmed based on the vehicle state information, the MRM strategy determination unit 240 may determine the MRM type as the MRM strategy. For example, the MRM strategy determination unit 240 may determine the straight stop 311 as the MRM strategy since only the straight stop 311 can be performed in a situation where the lateral control 321 function does not operate normally. As another example, the MRM strategy determination unit 240 may determine the straight stop 311 as the MRM strategy since only the straight stop 311 can be performed when driving lanes are not detected due to a sensor defect and/or external environment.

When there is a plurality of MRM types that can be performed, which is confirmed based on the vehicle state information, the MRM strategy determination unit 240 may determine an MRM type that can be performed within a designated minimal risk condition (MRC) range. According to an embodiment, the designated MRC range may be set and/or changed by an operator and/or a designer. According to an embodiment, the designated MRC range may be set differently according to the vehicle performance, vehicle type, and/or external environmental factors (e.g., weather, time, etc.).

According to an embodiment, the MRM strategy determination unit 240 may determine an MRM type that can be performed within the MRC range based on whether there is a shoulder within the designated MRC range. When there is no shoulder within the designated MRC range, the MRM strategy determination unit 240 may determine the in-lane stop 312 or the straight stop 311 as the MRM type that can be performed within the MRC range.

When there is a shoulder within the designated MRC range, the MRM strategy determination unit 240 may determine an MRM type that can be performed within the MRC range based on the size of the shoulder. When the size of the shoulder within the designated MRC range is greater than or equal to a designated size, the MRM strategy determination unit 240 may determine the full-shoulder stop 314, the half-shoulder stop 313, the in-lane stop 312, or the straight stop 311 as the MRM type that can be performed within the MRC range. The designated size may be determined based on the size of the vehicle. When the size of the shoulder is smaller than the designated size, the MRM strategy determination unit 240 may determine the half-shoulder stop 313, the in-lane stop 312, or the straight stop 311 as the MRM type that can be performed within the MRC range.

According to various embodiments, when there is a plurality of MRM types that can be performed within the designated MRC range, the MRM strategy determination unit 240 may select a final MRM strategy considering the priorities and/or surrounding object information.

According to an embodiment, when there is a plurality of MRM types that can be performed within the designated MRC range, the MRM strategy determination unit 240 may selects an MRM type of the highest priority among the MRM types that can be performed within the designated MRC range as the final MRM strategy.

FIG. 4 is a flowchart illustrating an operation of performing a minimal risk maneuver of a vehicle according to various embodiments.

Referring to FIG. 4, at operation S10, the vehicle 100 may acquire a request for starting a minimal risk maneuver (MRM). According to embodiments, the processor 130 may generate a request for starting a minimal risk maneuver function when the engine of the vehicle 100 is turned on and the vehicle 100 begins to move at a predetermined speed or higher. Alternatively, the processor 130 may acquire state information of the vehicle 100 and surroundings of the vehicle 100, and generate a minimal risk maneuver request based on the acquired state information. Alternatively, the processor 130 may acquire a minimal risk maneuver request from the outside received through the communication device 150 or the sensor 110. The minimal risk maneuver request may mean a command that directs the vehicle 100 to perform a minimal risk maneuver.

At operation S20, the vehicle 100 may execute a minimal risk maneuver function when there is a minimal risk maneuver request.

The minimal risk maneuver function may include an operation of monitoring the state of a vehicle (S21), an operation of determining an MRM type (S23), and an operation of executing the determined MRM type (S25).

When a minimal risk maneuver request is acquired (S10), the vehicle 100 may monitor the state of the vehicle 100 at operation S21. At operation S21, the vehicle 100 may check the state of the autonomous driving system and/or the vehicle, analyze severity when there is a fault, and recognize the effect on the autonomous driving system and/or the vehicle. In addition, the vehicle 100 may check the states of related system components to determine the performance and capability of the current dynamic driving task (DDT) of the autonomous driving system.

According to embodiments, the vehicle 100 may monitor the states of components of the vehicle 100 and the environment information around the vehicle 100 using the vehicle state information acquisition unit 210 and the surrounding environment information acquisition unit 220. The vehicle 100 may monitor the state of each component of the vehicle 100 and the environment information around the vehicle 100, for example, lanes, surrounding vehicle information, and the like, in real time. The vehicle 100 may determine which sensors or components are currently available (or operable) among the sensors 110.

At operation S23, the vehicle 100 may determine an MRM type for emergency stopping based on the acquired vehicle state information and surrounding environment information. According to various embodiments, the MRM type of a vehicle may include a straight stop, an in-lane stop, a half-shoulder stop, and a full-shoulder stop as shown in FIG. 3. However, it is not limited thereto, and additional MRM types may be included in other embodiments.

The vehicle 100 may determine an MRM type suitable for the current fault state based on the determination result of the fault state. According to an embodiment, when only deceleration control of the vehicle is possible, only the straight stop may be selected as a type that can be realized. According to another embodiment, when steering control and deceleration control of the vehicle are possible, the type of in-lane stop may be selected in addition to the straight stop. According to another embodiment, when a lane change function and a shoulder detection function among the autonomous driving functions are possible, as well as the steering control and the deceleration control of the vehicle, the types of half-shoulder stop and full-shoulder stop may also be selected.

When the vehicle 100 executes the MRM type determined at operation S25 according to the determination at operation S23 and finally reaches a minimal risk state 30, e.g., a stopped state, the minimal risk maneuver function may be terminated.

According to an embodiment, it is general that the vehicle 100 maintains the initial MRM type determined at operation S23 and executes the MRM at operation S25 according thereto. When a serious change occurs in internal or external factors or it is determined that the selected MRM type cannot be performed due to a change in the traffic situation, the vehicle 100 may change the MRM type. At this point, when the MRM type needs to be changed while performing an MRM already determined at operation S25, the vehicle 100 may change the MRM type in a reasonable and safe manner without delaying reaching the minimal risk condition.

According to an embodiment, when a person, including the driver, intervenes 40 to take over the DDT at any time point while the vehicle 100 is performing the minimal risk maneuver function, all the autonomous driving functions, including the minimal risk maneuver function, can be terminated, and the person may acquire the right to control the vehicle.

As described above, the operation of determining an MRM type at operation S23 of FIG. 4 may be performed by the MRM strategy determination unit 240 of the vehicle 100.

According to an embodiment, the MRM strategy determination unit 240 may generate a vehicle control command based on the determined MRM type and/or target point and transmits the vehicle control command to the controller 120, and the controller 120 may control the vehicle 100 based on the command to execute the determined MRM type and make the vehicle 100 satisfy the minimal risk condition at the target point. According to another embodiment, the controller 120 may acquire the MRM type and the target point from the MRM strategy determination unit 240, and perform vehicle control by itself so that the MRM type is executed and the vehicle 100 satisfies the minimal risk condition at the target point.

The MRM strategy determination unit 240 may determine the MRM type based on the vehicle state information and the surrounding environment information and determine, at the same time, a point that satisfies the minimal risk condition, i.e., a target point where the vehicle 100 will stop.

As described above, the MRM types may have priorities set to decrease in order of the full-shoulder stop 314, half-shoulder stop 313, in-lane stop 312, and straight stop 311. Therefore, in the cases other than special situations, such as when the lateral control 321 function does not operate normally, the MRM strategy determination unit 240 may determine the MRM type according to the priorities described above.

However, when the stopping target point for the half-shoulder stop corresponds to a safe place close to the current location of the vehicle, selecting the half-shoulder stop, rather than the full-shoulder stop where the stopping target point is far away, may be a more reasonable minimal risk maneuver. That is, determining an MRM type by the MRM strategy determination unit 240 based on the complexity of the route to the stopping point and the stopping risk at the stopping point, rather than simply determining the MRM type based on the set priorities, may further contribute to safety of the vehicle.

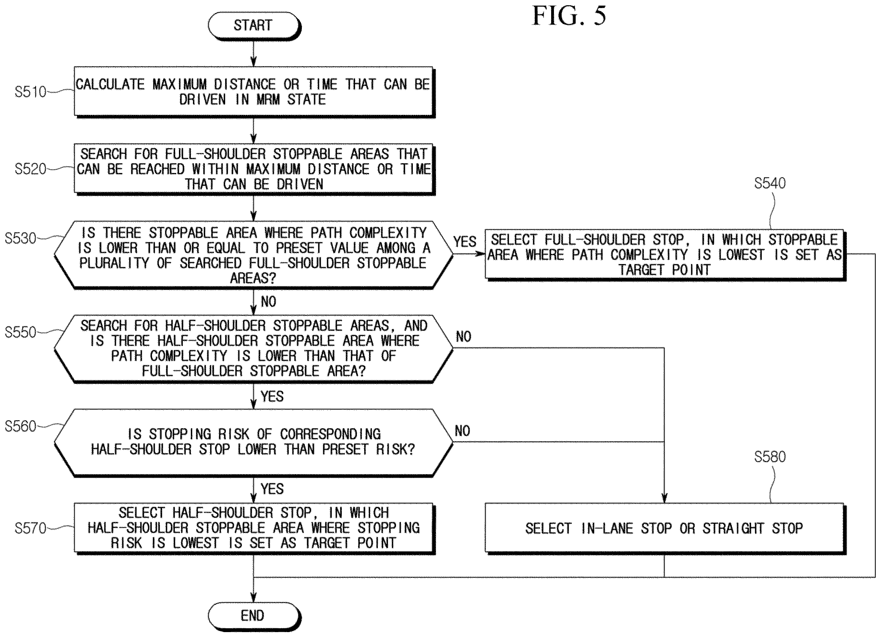

FIG. 5 is a flowchart illustrating an operation of determining a target point and an MRM type in consideration of route complexity and stopping risk when performing a minimal risk maneuver of a vehicle according to various embodiments.

When there is an MRM request as shown in FIG. 4, at operation S510, the vehicle 100 or the MRM strategy determination unit 240 may calculate the maximum distance or maximum time that can be driven in an MRM state.

According to an embodiment, the vehicle 100 may calculate the maximum distance or maximum time that can be driven in an MRM state based on the vehicle state information. The time until a serious risk event occurs may be calculated by calculating a fault tolerant time at the time point when the MRM is triggered. In addition, according to an embodiment, the vehicle 100 may detect a factor that generates a fault, and calculate a fault tolerance time including the time period of performing a safety mechanism.

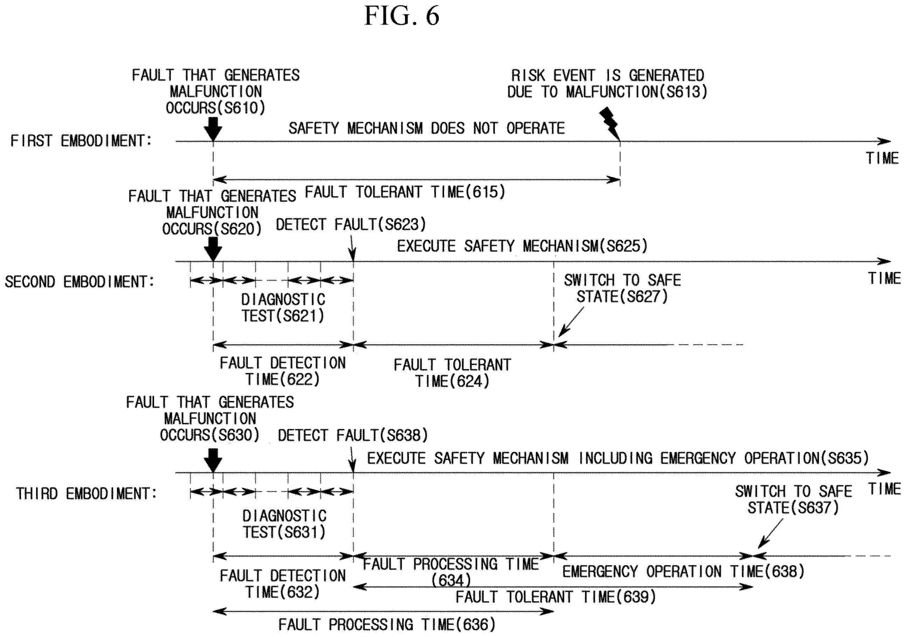

FIG. 6 is a diagram showing examples of calculating a maximum time that can be driven in a fault state according to various embodiments.

Referring to FIG. 6, in a first embodiment, although a fault that generates a malfunction of the vehicle 100 occurs (S610), a safety mechanism for handling the fault may not be operated or cannot be operated. Then, a risk event due to the malfunction may occur (S613) after the fault tolerant time 615. In the first embodiment, the fault tolerant time 615 may be regarded as a time starting from the time point of occurring a fault that generates a malfunction (S610) until a risk event occurs due to the malfunction (S613).

Referring to FIG. 6, in a second embodiment, when a fault that generates a malfunction (S620) is detected (S623), the vehicle 100 may execute a safety mechanism (S625). According to an embodiment, the vehicle 100 may perform a diagnostic test (S621) periodically, i.e., at regular time intervals. When the diagnostic test (S621) is performed after a fault that generates a malfunction (S620) is detected, a fault is detected (S623) after the fault detection time 622, and when a fault is detected, the vehicle 100 may respond to the fault by executing the safety mechanism (S625), and is switched to the safe state (S627) after a predetermined period of time. In the second embodiment, the fault tolerant time 624 may be regarded as a time starting from the time point of detecting a fault (S623) to the time point of switching to the safe state (S627).

Referring to FIG. 6, in a third embodiment, when a fault that generates a malfunction (S630) is detected (S632), the vehicle 100 may execute a safety mechanism including an emergency operation (S635). According to an embodiment, the vehicle 100 may perform a diagnostic test (S631) periodically, i.e., at regular time intervals. When the diagnostic test (S631) is performed after a fault that generates a malfunction (S630) is detected, a fault is detected (S633) after the fault detection time 632, and when a fault is detected, the vehicle 100 may respond to the fault by executing the safety mechanism (S635), may perform an emergency operation during the emergency operation time 638 after the fault processing time 634, and may be switched to the safe state (S637) when the emergency operation is completed. In the third embodiment, the fault tolerant time 639 may be regarded as a time starting from the time point of detecting a fault (S638) to the time point of switching to the safe state (S637). Alternatively, according to another embodiment, the fault tolerant time may be the same as the emergency operation time 638 starting from the time point of completing the process of handling the fault to the time point of switching to the safe state (S637).

When the fault tolerant time is determined, the vehicle 100 may determine a fault tolerant distance based on expected speed information of the vehicle 100 using traffic flow information on the road where the vehicle is currently located.

Referring to FIG. 5 again, at operation S520, the vehicle 100 may search for full-shoulder stoppable areas that can be reached within the maximum distance or maximum time that can be driven, calculated at operation S510.

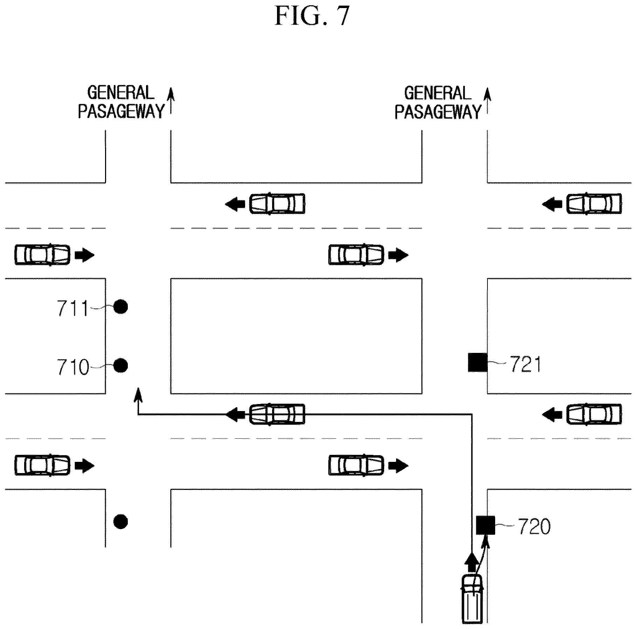

FIG. 7 is a view showing an example for explaining the operation of FIG. 5.

Referring to the embodiment of FIG. 7, the vehicle 100 may search for full-shoulder stoppable areas that can be reached within the maximum distance or maximum time that can be driven. According to an embodiment, the area where the full-shoulder stop is possible may be calculated considering the size of the vehicle 100, and the vehicle 100 may determine whether the full-shoulder stop is possible by grasping the size of an empty shoulder area and presence of obstacles. In the example of FIG. 7, the full-shoulder stoppable areas may be indicated by black circles.

At operation S530, the vehicle 100 may determine whether there is a stoppable area where route complexity is lower than or equal to a preset value, among a plurality of searched full-shoulder stoppable areas. Here, the route complexity may be calculated considering factors such as the number of intersections to pass, the number of left turns, the number of right turns, the distance to the destination, and the like. For example, the route complexity may be calculated by assigning a score of 3 points for one left turn, 2 points for one right turn, and 1 point for a distance of 1 Km. In the example of FIG. 7, the route complexity of the stoppable area 710 may be calculated as a total of 6 points of one left turn (3 points) + one right turn (2 points) + a distance of 1Km (1 point), and the route complexity of the stoppable area 711 may have a value larger than that of the route complexity of the stoppable area 710 due to the distance.

According to an embodiment, the route complexity may be calculated by assigning a different weight to each of the factors described above and determining contribution of each factor based on the weight. In the example of FIG. 7, there are three full-shoulder stoppable areas, and route complexity of two of the full-shoulder stoppable areas 710 and 711 may be lower than or equal to a preset value.

When the vehicle 100 determines that there is a stoppable area where route complexity is lower than or equal to a preset value as a result of the determination at operation S530, the vehicle 100 may proceed to operation S540, set a stoppable area where the route complexity is the lowest as the target point, and select the full-shoulder stop as the MRM type. In the example of FIG. 7, the vehicle 100 may set the area where the route complexity is the lowest (e.g., 710) as the final target point among the two areas 710 and 711 with route complexity lower than or equal to a preset value.

When the vehicle 100 determines that there is no stoppable area where route complexity is lower than or equal to a preset value as a result of the determination at operation S530, the vehicle 100 may proceed to operation S550, search for half-shoulder stoppable areas, and determine whether there is a half-shoulder stoppable area where the route complexity is lower than that of a full-shoulder stoppable area. According to another embodiment, at operation S550, the vehicle 100 may also determine whether there is a half-shoulder stoppable area where the route complexity is lower than a preset value.

When the vehicle 100 determines that there is no half-shoulder stoppable area that satisfies a corresponding condition as a result of the determination at operation S550, the vehicle 100 may proceed to operation S580, and select the in-lane stop or the straight stop as the MRM type.

When the vehicle 100 may determine that there is a half-shoulder stoppable area that satisfies a corresponding condition as a result of the determination at operation S550, the vehicle 100 may proceed to operation S560, and determine whether the stopping risk at the half-shoulder stoppable area that satisfies a corresponding condition is lower than a preset risk. Here, the stopping risk may be calculated based on the size of the stoppable area, whether it is a stopping prohibited area such as a crosswalk, firefighting facility, or the like, maximum speed information of the road, traffic flow information, and the like, and the stopping risk may be calculated by assigning a different weight to each factor. For example, when the half-shoulder stoppable area does not correspond to a designated stopping prohibited area, 0 points may be set, otherwise 3 points may be set, and when the maximum speed of the road is 40Km/h, 1 point may be set, when it is 50Km/h, 2 points may be set, and when it is 60Km/h, 3 points may be set. In addition, taking the half-shoulder stoppable area 720 of FIG. 7 as an example, when the half-shoulder stoppable area does not correspond to the designated stopping prohibited area (0 points), and the maximum speed on the road is 40 km/h (1 point), and the degree of occupying the road is 1/4 (1 point), the stopping risk may be calculated as 2 points.

When there is no half-shoulder stoppable area having a stopping risk lower than a preset risk as a result of the determination at operation S560, the vehicle 100 may proceed to operation S580, and select the in-lane stop or the straight stop as the MRM type.

When there is a half-shoulder stoppable area having a stopping risk lower than a preset risk (e.g., 3 points) as a result of the determination at operation S560, the vehicle 100 may proceed to operation S570, and select a half-shoulder stop as the MRM type by setting a half-shoulder stoppable area where the stopping risk is the lowest as the target point.

Referring to the example of FIG. 7, there are half-shoulder stoppable areas 720 and 721 with route complexity lower than that of the full-shoulder stoppable areas, and among these, a half-shoulder stoppable area 720) with the lowest stopping risk is selected as the target point.

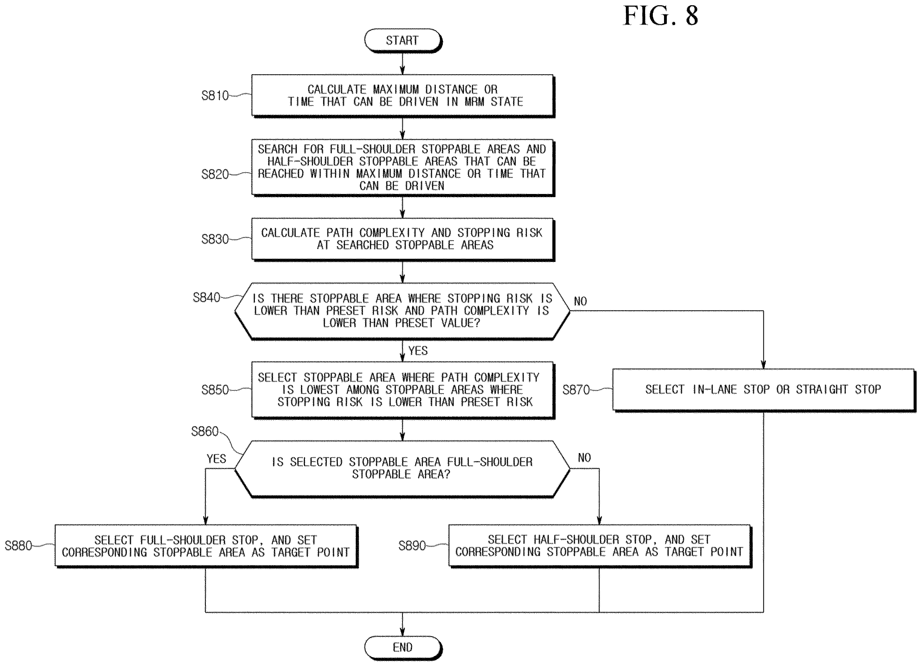

FIG. 8 is a flowchart illustrating an operation of determining a target point and an MRM type in consideration of route complexity and stopping risk when performing a minimal risk maneuver of a vehicle according to other embodiments.

When there is an MRM request as shown in FIG. 4, at operation S810, the vehicle 100 or the MRM strategy determination unit 240 may calculate the maximum distance or maximum time that can be driven in an MRM state.

According to an embodiment, the vehicle 100 may calculate the maximum distance or maximum time that can be driven in an MRM state based on the vehicle state information. The time until a serious risk event occurs may be calculated by calculating a fault tolerant time at the time point when the MRM is triggered. In addition, according to an embodiment, the vehicle 100 may detect a factor that generates a fault, and calculate a fault tolerance time including the time period of performing a safety mechanism. An example of calculating the fault tolerant time is shown in FIG. 6, and since it has already been described, it is omitted here.

At operation S820, the vehicle 100 may search for full-shoulder stoppable areas and half-shoulder stoppable areas that can be reached within the maximum distance or maximum time that can be driven, calculated at operation S810.

At operation S830, the vehicle 100 may calculate route complexity and stopping risk at the searched full-shoulder stoppable areas and half-shoulder stoppable areas. Here, the route complexity may be calculated equally for the full-shoulder stoppable areas and the half-shoulder stoppable areas. As described above, the route complexity may be calculated considering factors such as the number of intersections to pass, the number of left turns, the number of right turns, the distance to the destination, and the like. For example, the route complexity may be calculated by assigning a score of 3 points for one left turn, 2 points for one right turn, and 1 point for a distance of 1 Km. In the example of FIG. 7, the route complexity of the stoppable area 710 may be calculated as a total of 6 points of one left turn (3 points) + one right turn (2 points) + a distance of 1Km (1 point), and the route complexity of the stoppable area 711 may have a value larger than that of the route complexity of the stoppable area 710 due to the distance.

According to an embodiment, the route complexity may be calculated by assigning a different weight to each of the factors described above and determining contribution of each factor based on the weight.

The stopping risk may be calculated only for the half-shoulder stoppable areas. In the case of the full-shoulder stoppable area, as the entire vehicle may enter the shoulder stoppable area, the stopping risk may be regarded as 0. The stopping risk in the half-shoulder stoppable area may be calculated based on the size of the stoppable area, whether it is a stopping prohibited area such as a crosswalk, firefighting facility, or the like, maximum speed information of the road, traffic flow information, and the like, and the stopping risk may be calculated by assigning a different weight to each factor.

At operation S840, the vehicle 100 may determine whether there is a stoppable area where the stopping risk is lower than a preset risk and the route complexity is lower than or equal to a preset value. In the case of the full-shoulder stoppable area, as the stopping risk of the vehicle 100 may be regarded as 0, only whether the route complexity is lower than or equal to a preset value can be determined. For example, the vehicle 100 may determine that the full-shoulder stoppable areas 710 and 711 and the half-shoulder stoppable area 720 satisfy the conditions of operation S840 by calculating the route complexity and the stopping risk for the full-shoulder stoppable areas (black circles) and the half-shoulder stoppable areas (black squares) in FIG. 7.

When the vehicle 100 determines that there is no stoppable area that satisfies the conditions of operation S840 as a result of the determination at operation S840, the vehicle 100 may proceed to operation S870 and select the in-lane stop or the straight stop as the MRM type.

When the vehicle 100 determines that there is a stoppable area that satisfies the conditions of operation S840 as a result of the determination at operation S840, the vehicle 100 may select a stoppable area where the route complexity is the lowest among the stoppable areas where the stopping risk is lower than a preset risk at operation S850. In the example of FIG. 7, the vehicle 100 may select the half-shoulder stoppable area 720.

The vehicle 100 may determine whether the stoppable area selected at operation S860 is a full-shoulder stoppable area, and when it is a full-shoulder stoppable area, the vehicle 100 may proceed to operation S880, select the full-shoulder stop as the MRM type, and set the stoppable area selected at operation S850 as the target point.

When the vehicle 100 determines that the stoppable area selected at operation S860 is not a full-shoulder stoppable area, the vehicle 100 may proceed to operation S890, select the half-shoulder stop as the MRM type, and set the stoppable area selected at operation S850 as the target point.

As described above, various embodiments propose a method of improving safety while minimizing the risk of a vehicle, when a fault occurs during autonomous driving and the minimal risk maneuver (MRM) function is performed to reach the minimal risk condition, i.e., a stopped state,by selecting an MRM type and a target point based on route complexity and stopping risk at each stoppable area.

According to various embodiments of this document, when a vehicle detects a situation in which normal autonomous driving is not possible during autonomous driving and determines to stop on the shoulder using a minimal risk maneuver strategy, as an optimal stopping type and stopping location are determined by determining route complexity and stopping risk, vehicle risk is minimized, and safety can be improved.

## Claims

1. An autonomous vehicle comprising:
at least one sensor for detecting a surrounding environment of the vehicle and generating surrounding environment information;
a processor for generating vehicle state information by monitoring a state of the vehicle, and controlling autonomous driving of the vehicle; and
a controller for controlling an operation of the vehicle according to control of the processor,
wherein the processor is configured to:
determine whether a minimal risk maneuver is needed based on at least one among the surrounding environment information and the vehicle state information during autonomous driving of the vehicle,
determine a minimal risk maneuver type and a target point where the vehicle will stop when the minimal risk maneuver is needed, and
control the vehicle to stop at the target point based on the determined minimal risk maneuver type and target point.

2. The autonomous vehicle according to claim 1, wherein the processor is further configured to:
calculate a maximum distance or a maximum time that can be driven in a minimum risk maneuver state,
search for stoppable areas that can be reached within the maximum distance or the maximum time,
classify the searched stoppable areas into full-shoulder stoppable areas and half-shoulder stoppable areas,
calculate at least one among route complexity and stopping risk of each of the full-shoulder stoppable areas,
determine whether or not stopping is possible at the full-shoulder stoppable areas based on at least one among the calculated route complexity and stopping risk, and
calculate, when stopping is not possible in all of the full-shoulder stoppable areas, at least one among route complexity and stopping risk of each of the half-shoulder stoppable areas, and
determine a minimal risk maneuver type and a target point where the vehicle will stop based on at least one among the route complexity and the stopping risk of the half-shoulder stoppable areas.

3. The autonomous vehicle according to claim 1 or 2, wherein the processor is further configured to:
calculate a maximum distance or a maximum time that can be driven in a minimum risk maneuver state,
search for stoppable areas that can be reached within the maximum distance or the maximum time,
calculate at least one among route complexity and stopping risk of each of the stoppable areas, and
determine a minimal risk maneuver type and a target point where the vehicle will stop based on at least one among the route complexity and the stopping risk of the stoppable areas, and
wherein the processor is preferably further configured to:
search for full-shoulder stoppable areas that can be reached within the maximum distance or the maximum time,
calculate route complexity of each of the searched full-shoulder stoppable areas,
determine a full-shoulder stoppable area where route complexity is lower than or equal to a preset value and having the lowest value as a target point where the vehicle will stop, and
determine a full-shoulder stop as the minimal risk maneuver.

4. The autonomous vehicle according to claim 3, wherein the processor is further configured to:
search for half-shoulder stoppable areas, when there is no full-shoulder stoppable area where the route complexity is lower than or equal to a preset value,
when there are half-shoulder stoppable areas where route complexity is lower than the route complexity of the full-shoulder stoppable areas and the stopping risk is lower than a preset risk, determine a half-shoulder stoppable area where the stopping risk is the lowest as a target point where the vehicle will stop, and a half-shoulder stop as the minimal risk maneuver type, and
when there is no half-shoulder stoppable area where the route complexity is lower than the route complexity of the full-shoulder stoppable areas, determine an in-lane stop or a straight stop as the minimal risk maneuver type.

5. The autonomous vehicle according to claim 3 or 4, wherein the processor is configured to:
search for half-shoulder stoppable areas, when there is no full-shoulder stoppable area where the route complexity is lower than or equal to a preset value,
when there are half-shoulder stoppable areas where route complexity is lower than or equal to the preset value and the stopping risk is lower than a preset risk, determine a half-shoulder stoppable area where the stopping risk is the lowest as a target point where the vehicle will stop and a half-shoulder stop as the minimal risk maneuver type, and
when there is no half-shoulder stoppable area where the route complexity is lower than or equal to the preset value, determine an in-lane stop or a straight stop as the minimal risk maneuver type.

6. The autonomous vehicle according to any one of claims 3 to 5, wherein the processor is further configured to:
search for full-shoulder stoppable areas and half-shoulder stoppable areas that can be reached within the maximum distance or the maximum time,
calculate route complexity and stopping risk of each of the searched full-shoulder stoppable areas and half-shoulder stoppable areas, and
select an in-lane stop or a straight stop as the minimal risk maneuver type when there is no stoppable area where the stopping risk is lower than a preset risk and the route complexity is lower than or equal to a preset value.

7. The autonomous vehicle according to claim 6, wherein the processor is further configured to:
select a stoppable area where the route complexity is the lowest among stoppable areas where the stopping risk is lower than a preset risk, when there are stoppable areas where the stopping risk is lower than a preset risk and the route complexity is lower than or equal to a preset value,
determine a full-shoulder stop as the minimal risk maneuver type and determine the selected stoppable area as a target point, when the selected stoppable area is a full-shoulder stoppable area, and
determine a half-shoulder stop as the minimal risk maneuver type, and determine the selected stoppable area as a target point, when the selected stoppable area is not a full-shoulder stoppable area.

8. The autonomous vehicle according to any one of the preceding claims, wherein the processor is further configured to calculate the route complexity based on the number of intersections to pass, the number of left turns, the number of right turns, and a distance to a destination, and/or the processor is further configured to calculate the stopping risk based on a size of a stoppable area, whether an area is a stopping prohibited area, maximum speed information of a road, and traffic flow information.

9. An operation method of a vehicle, the method comprising:
acquiring at least one among surrounding environment information and vehicle state information during autonomous driving of the vehicle;
determining whether a minimal risk maneuver is needed based on at least one among the surrounding environment information and the vehicle statue information;
determining a minimal risk maneuver type and a target point where the vehicle will stop, when it is determined that a minimal risk maneuver is needed; and
controlling the vehicle to stop at the target point based on the determined minimal risk maneuver type and target point.

10. The operation method of a vehicle according to claim 9, wherein the determining a minimal risk maneuver type and a target point comprises:
calculating a maximum distance or a maximum time that can be driven in a minimum risk maneuver state;
searching for stoppable areas that can be reached within the maximum distance or the maximum time;
classifying the searched stoppable areas into full-shoulder stoppable areas and half-shoulder stoppable areas;
calculating at least one among route complexity and stopping risk at the full-shoulder stoppable areas;
determining whether or not stopping is possible at the full-shoulder stoppable areas based on at least one among the calculated route complexity and stopping risk; and
calculating, when stopping is not possible in all of the full-shoulder stoppable areas, at least one among route complexity and stopping risk at the half-shoulder stoppable areas, and
determining a minimal risk maneuver type and a target point where the vehicle will stop based on at least one among the route complexity and the stopping risk at the half-shoulder stoppable areas.

11. The operation method of a vehicle according to claim 9 or 10, wherein the determining a minimal risk maneuver type and a target point further comprises:
calculating a maximum distance or a maximum time that can be driven in a minimum risk maneuver state;
searching for stoppable areas that can be reached within the maximum distance or the maximum time;
calculating at least one among route complexity and stopping risk of each of the stoppable areas; and
determining a minimal risk maneuver type and a target point where the vehicle will stop based on the route complexity and the stopping risk of the stoppable areas,
wherein the determining a minimal risk maneuver type and a target point preferably further comprises:
searching for full-shoulder stoppable areas that can be reached within the maximum distance or the maximum time;
calculating route complexity of the searched full-shoulder stoppable areas;
determining a full-shoulder stoppable area where route complexity is lower than or equal to a preset value and having the lowest value as a target point where the vehicle will stop; and
determining a full-shoulder stop as the minimal risk maneuver.

12. The operation method of a vehicle according to claim 11, wherein the determining a minimal risk maneuver type and a target point further comprises:
searching for half-shoulder stoppable areas, when there is no full-shoulder stoppable area where the route complexity is lower than or equal to a preset value;
when there are half-shoulder stoppable areas where route complexity is lower than the route complexity of the full-shoulder stoppable areas and the stopping risk is lower than a preset risk, determining a half-shoulder stoppable area where the stopping risk is the lowest as a target point where the vehicle will stop and a half-shoulder stop as the minimal risk maneuver type; and
when there is no half-shoulder stoppable area where the route complexity is lower than the route complexity of the full-shoulder stoppable areas, determining an in-lane stop or a straight stop as the minimal risk maneuver type.

13. The operation method of a vehicle according to claim 11 or 12, wherein the determining a minimal risk maneuver type and a target point further comprises:
searching for half-shoulder stoppable areas, when there is no full-shoulder stoppable area where the route complexity is lower than or equal to a preset value;
when there are half-shoulder stoppable areas where route complexity is lower than or equal to the preset value and the stopping risk is lower than a preset risk determining a half-shoulder stoppable area where the stopping risk is the lowest as a target point where the vehicle will stop and a half-shoulder stop as the minimal risk maneuver type; and
when there is no half-shoulder stoppable area where the route complexity is lower than or equal to the preset value, determining an in-lane stop or a straight stop as the minimal risk maneuver type.

14. The operation method of a vehicle according to any one of claims 11 to 13, wherein the determining a minimal risk maneuver type and a target point further comprises:
searching for full-shoulder stoppable areas and half-shoulder stoppable areas that can be reached within the maximum distance or the maximum time;
calculating route complexity and stopping risk at the searched full-shoulder stoppable areas and half-shoulder stoppable areas; and
selecting an in-lane stop or a straight stop as the minimal risk maneuver type when there is no stoppable area where the stopping risk is lower than a preset risk and the route complexity is lower than or equal to a preset value.

15. The operation method of a vehicle according to claim 14, wherein the determining a minimal risk maneuver type and a target point further comprises:
selecting a stoppable area where the route complexity is the lowest among stoppable areas where the stopping risk is lower than a preset risk, when there are stoppable areas where the stopping risk is lower than a preset risk and the route complexity is lower than or equal to a preset value;
determining a full-shoulder stop as the minimal risk maneuver type, and the selected stoppable area as a target point, when the selected stoppable area is a full-shoulder stoppable area; and
determining a half-shoulder stop as the minimal risk maneuver type, and the selected stoppable area as a target point, when the selected stoppable area is not a full-shoulder stoppable area.

16. The operation method of a vehicle according to any one of claims 10 to 15, wherein the route complexity is calculated based on the number of intersections to pass, the number of left turns, the number of right turns, and a distance to a destination, and/or the stopping risk is calculated based on a size of a stoppable area, whether an area is a stopping prohibited area, maximum speed information of a road, and traffic flow information.
